# EUROPÄISCHE PATENTANMELDUNG

(11) **EP 1 806 518 A1**
(43) Veröffentlichungstag der Anmeldung: **11.07.2007**
(21) Anmeldenummer: 06012218.1
(22) Anmeldetag: 14.06.2006
(51) Int. Cl.: F16F 1/38

(54) **Elastomer-Gelenklager für Fahrzeuge**

(30) Priorität: 09.01.2006 DE 202006000286 U
(71) Anmelder: Jörn GmbH, 71336 Waiblingen (DE)
(72) Erfinder: Zawadzki, Bernd, 71409 Schwaikheim (DE)
(74) Vertreter: Neubauer, Hans-Jürgen

(57) **Zusammenfassung**

Die Erfindung betrifft ein Elastomer-Gelenklager für Fahrzeuge, mit einem Lagerinnenteil (2) und einer das Lagerinnenteil (2) in Umfangsrichtung umgebenden Außenschale (4), zwischen denen ein Elastomerkörper (6) einvulkanisiert ist. Erfindungsgemäß ist die Außenschale (4) aus einem verformbaren Material ausgebildet, welches sich beim Einbringen, insbesondere Einpressen, des Elastomerlagers (1) in eine zugeordnete Lageraufnahme (17), unter Aufbau einer radialen Vorspannung im Elastomerkörper (6), radial verformt. Dabei legt sich die Außenschale (4) mit ihrer Außenkontur (5) im wesentlichen formschlüssig an die Innenwandung der Aufnahme (17) an, und die Außenschale (4) ist in Richtung der Lagerachse (3) gesehen zu beiden Seiten mittels einer an der Lageraufnahme (17) abgeordneten, axialen Abstützeinrichtung (18, 19) abgestützt, vorzugsweise spannungsfrei abgestützt.

## Beschreibung

Die Erfindung betrifft ein Elastomer-Gelenklager für Fahrzeuge nach dem Oberbegriff des Anspruchs 1.

Ein allgemein bekanntes, gattungsgemäßes Elastomer-Gelenklager weist ein starres, unverformbares metallisches Lagerinnenteil und eine das Lagerinnenteil in Umfangsrichtung umgebende, metallische Außenschale auf, zwischen denen ein Elastomerkörper angeordnet und einvulkanisiert ist. Um ein derartiges Elastomer-Metall-Lager in eine Aufnahme, wie beispielsweise ein Aufnahmeauge eines Dreieckslenkers zur Verbindung eines Achskörpers mit einem Fahrzeugaufbau, einpressen zu können, weist dieses außenumfangsseitig einen bevorzugt V-förmig ausgebildeten Schlitzbereich auf, der sich von der vorzugsweise metallischen Außenschale ausgehend durch den Elastomerkörper hindurch bis zum Lagerinnenteil erstreckt und der im montierten, verpressten Zustand des Elastomer-Metall-Elementes im Aufnahmeauge wenigstens zum Teil, bevorzugt jedoch ganz geschlossen ist. Bei mehreren Schlitzen sind diese paarweise, einander in Umfangsrichtung diametral gegenüberliegend anzuordnen. Ein derartiger Aufbau ist relativ aufwendig und kostenintensiv in der Herstellung.

Aufgabe der Erfindung ist es, ein alternatives Elastomer-Gelenklager für Fahrzeuge, insbesondere für Nutzfahrzeuge, zur Verfügung zu stellen, das auf baulich einfache Weise hergestellt werden kann und das darüber hinaus im montierten, eingepressten Zustand eine hohe Funktionssicherheit und Lebensdauer aufweist.

Diese Aufgabe wird gelöst mit den Merkmalen des Anspruchs 1. Vorteilhafte Ausgestaltungen der Erfindung sind Gegenstand der Unteransprüche.

Gemäß Anspruch 1 ist die Außenschale aus einem verformbaren Material ausgebildet, wobei sie sich beim Einpressen des Elastomerlagers in eine zugeordnete Lageraufnahme, unter Aufbau einer radialen Vorspannung im Elastomerkörper, radial verformt, d. h. sie wird im Durchmesser reduziert, wobei sie sich mit ihrer Außenkontur im wesentlichen formschlüssig an die Innenwandung der Aufnahme anlegt. Dabei ist die Außenschale in Richtung der Lagerachse als Axialrichtung gesehen zu beiden Seiten mittels einer axialen Abstützeinrichtung abgestützt, vorzugsweise spannungsfrei abgestützt. Damit kann auf einfache Weise ohne großen baulichen Aufwand ein "Wegfließen" der Außenschale, die z. B. aus einem Kunststoffmaterial als verformbares Material hergestellt ist, bei einer betriebsmäßigen Belastung vorteilhaft vermieden werden. Besonders preiswert und einfach ist eine Abstützeinrichtung z. B. durch eine integral mit der Aufnahme ausgebildete axiale Anschlagschulter ausgebildet. Um das Lager einpressen zu können, ist dann die gegenüberliegende Seite bevorzugt mit einem axialen Anschlagring mit Sicherungsring oder auch nur durch einen Sicherungsring axial zu sichern. Beliebige Variationen sind hierbei möglich.

Mit einem derartigen Aufbau der Außenschale aus einem verformbaren Material, das bevorzugt durch ein Kunststoffmaterial, insbesondere ein plastisch verformbares Kunststoffmaterial gebildet ist, wird zudem ein insgesamt baulich einfacher Aufbau des Elastomerlagers erzielt, der zudem preiswert in der Herstellung ist, und zwar zum einen durch den bevorzugten Wegfall der Schlitzbereiche, falls die Außenschale ein geschlossener Außenschalenring ist, und zum anderen generell durch die Verwendung eines preiswerten Kunststoffmaterials. Durch die Verformungs- bzw. Fließeigenschaften des Materials, insbesondere Kunststoffmaterials, wird dabei sichergestellt, dass sich die Außenschale im eingepressten Zustand so im Durchmesser reduziert und dabei im wesentlichen formschlüssig an die Innenwandung der Aufnahme anlegt, dass ein Lageraufbau zur Verfügung gestellt wird, mit dem Kräfte hervorragend aufgenommen werden können und der darüber hinaus eine lange Lebensdauer und Haltbarkeit aufweist. Grundsätzlich könnte die Außenschale jedoch auch radial beabstandete Schlitzbereiche aufweisen oder aber auch nur einen Schlitzbereich, solange beim Einpressen durch das Materialfließen sichergestellt ist, dass diese die erforderliche radiale, gleichmäßige Vorspannungsaufbringung im Elastomerkörper ermöglichen.

Das Lagerinnenteil ist bevorzugt um die Lagerachse rotationssymmetrisch ausgebildet mit einem sich in Richtung Lagerachse erstreckenden und dem Elastomerkörper zugeordneten sowie eine erhabene Ballenform aufweisenden Lagerinnenteil-Mittenbereich, wobei die Innenkontur der eine zylindrische Außenkontur aufweisenden Außenschale an die Außenkontur des Lagerinnenteils form- und konturangepasst ausgebildet ist und eine der Lagerinnenteil-Ballenform entsprechende, vertiefte Außenschalen-Ballenform als Gegenform in einem Außenschalen-Mittenbereich aufweist, an den sich in Lagerachsrichtung zu beiden Seiten radial umlaufende Außenschalen-Seitenbereiche anschließen, die damit eine größere Wandstärke aufweisen als der Außenschalen-Mittenbereich. Dadurch wird erreicht, dass die Außenschale bzw. bevorzugt der geschlossene Außenschalenring und das Lagerinnenteil mit einem in Umfangsrichtung im wesentlichen stets gleichen und den Elastomerkörper aufnehmenden Spaltabstand voneinander beabstandet sind, wodurch sehr hohe Kräfte, insbesondere kardanisch in dem Lager aufgenommen und abgestützt werden können. Mit einem derartigen Aufbau mit einem balligen Mittenbereich, der an der Innenkontur der Außenschale als Vertiefung ausgebildet ist und bei dem somit die Außenschalen-Seitenbereiche eine größere Wandstärke aufweisen als der Außenschalen-Mittenbereich wird somit insbesondere in den hochbelasteten Seitenbereichen ein Aufbau zur Verfügung gestellt, der aufgrund der höheren Materialstärke sehr gut, und zwar grundsätzlich auch unabhängig von einer axialen Abstützeinrichtung, einem axialen Fließen des verformbaren Außenschalenmaterials entgegenwirkt, wobei sich hierdurch zudem, insbesondere in Verbindung mit einer kardanischen Abstützung, sehr hohe Kraftaufnahmen bei einer entsprechenden Einfederung des Elastomer-Gelenklagers verwirklichen lassen. Durch diese Ausgestaltung wird ferner das axiale Auswandern des Elastomerkörpers begrenzt und dadurch auch eine unerwünschte Spaltbildung mit den damit einhergehenden unerwünschten Nebeneffekten, wie z. B. Eindringen von Schmutz etc., vermieden. Insgesamt wird daher mit einem derartigen bevorzugten Aufbau des erfindungsgemäßen Elastomer-Gelenklagers eine funktionssichere und dauerhaft belastbare Lageranordnung zur Verfügung gestellt.

Grundsätzlich könnte der Lagerinnenteil-Mittenbereich und damit entsprechend auch der Außenschalen-Mittenbereich aber auch mehr zylinderförmig bzw. zylindrisch ausgebildet sein, wenn z. B. im wesentlichen lediglich Radialkräfte abgestützt werden sollen und eine axiale Abstützung von Kräften nur eine untergeordnete Rolle spielt. An den Lagerinnenteil-Mittenbereich und an den Außenschalen-Mittenbereich können somit einfachst entsprechend der jeweiligen Einsatzfälle sich in Lagerachsrichtung anschließende axiale Stützflächen ausgebildet sein, mit der Axialkräfte abgestützt werden können. Beispielsweise kann dies auch in Form von entsprechend gestalteten Verjüngungs- bzw. Verengungsbereichen erfolgen, die z. B. auch als Krümmungsbereiche mit einem vorgegebenen Krümmungsradius ausgebildet sein können.

In den Elastomerkörper ist bevorzugt wenigstens eine, den Elastomerkörper in Umfangsrichtung bevorzugt in Elastomerschichten mit in etwa gleicher Materialstärke unterteilende und in Umfangsrichtung wenigstens bereichsweise um das Lagerinnenteil umlaufende Zwischenschale integriert, die an die Außenkontur des Lagerinnenteils form- und konturangepasst ausgebildet ist und somit ebenfalls einen entsprechend ausgebildeten Zwischenschalen-Längsmittenbereich oder gegebenenfalls weitere entsprechend ausgebildete Bereiche, wie z. B. Krümmungsbereiche zur Ausbildung axialer Stützflächen aufweist. Mit derartigen Zwischenschalen, die bevorzugt als Zwischenbleche ausgebildet sind, kann eine Stabilisierung des Elastomerkörpers gegen Fließen in Axialrichtung bzw. eine optimierte Kraftaufnahme im Elastomerkörper und damit im Lager erzielt werden.

Das Lagerinnenteil ist bevorzugt rohrförmig, d. h. beispielsweise mit einer sich in Axialrichtung bzw. in Richtung der Lagerachse erstreckenden Bohrung ausgebildet und im montierten Zustand formschlüssig auf ein Gegenelement aufgesteckt und dort lagefixiert gehalten und gesichert. Beispielsweise kann die Innenkontur des rohrförmigen Lagerinnenteils hier durch einen Innenkonus als Befestigungskonus ausgebildet sein, der auf einen Konuszapfen als Gegenelement aufgesteckt ist. Alternativ dazu kann das Lagerinnenteil jedoch auch sich einseitig, bevorzugt zu beiden Seiten an das Lagerinnenteil anschließende Anschlusspratzen aufweisen, die im montierten Zustand aus dem Bereich der Lageraufnahme, insbesondere eines Aufnahmeauges vorstehen und z. B. achsseitig an Lagerböcken mittels entsprechender Schraubverbindungen festgelegt sind.

Gemäß einer besonders bevorzugten Anwendungsform ist das Elastomerlager ein Zentralgelenklager eines Dreieckslenkers zur Verbindung eines Achskörpers mit einem Aufbau für Nutzfahrzeuge, von dem ausgehend sich Lagerschenkel im wesentlichen V-förmig zu den beiden anderen gegebenenfalls gleich aufgebauten Lagerstellen erstrecken. Das Lagerinnenteil selbst kann dabei aus einem Metallmaterial hergestellt sein.

Die Erfindung wird nachfolgend anhand einer Zeichnung näher erläutert.

Es zeigen:
- Fig. 1: eine schematische Draufsicht auf ein erfindungsgemäßes Elastomerlager, und
- Fig. 2: eine schematische Schnittansicht entlang der Linie A-A der Fig. 1 mit lediglich in der oberen Bildhälfte dargestellter axialer Abstützeinrichtung.

In den beiden Figuren ist ein erfindungsgemäßes Elastomer-Gelenklager 1 gezeigt, das ein starres, unverformbares und metallisches Lagerinnenteil 2 aufweist, das um eine Lagerachse 3 rotationssymmetrisch ausgebildet ist. Das Lagerinnenteil 2 ist hier rohrförmig mit einer sich in Lagerachsrichtung als Axialrichtung erstreckenden zylindrischen Bohrung ausgebildet, mittels der das Lagerinnenteil 2 im Rahmen der Montage formschlüssig auf einen zylindrischen Zapfen als Gegenelement aufgesteckt und dort lagefixiert gehalten und gesichert werden kann, was hier allerdings nicht dargestellt ist.

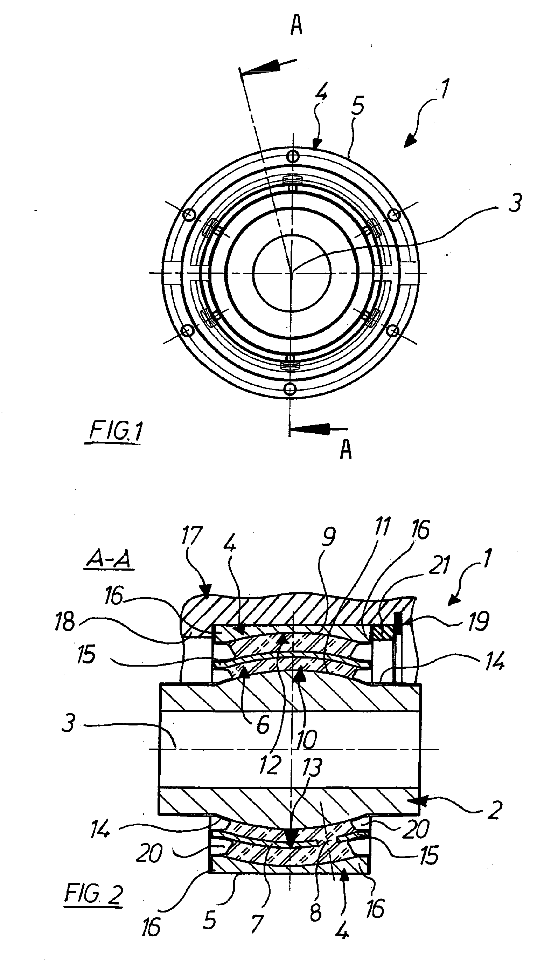

Ferner weist das Elastomer-Gelenklager 1 einen das Lagerinnenteil 2 in Umfangsrichtung umgebenden, geschlossenen Kunststoffring 4 aus einem vorzugsweise plastisch verformbaren Kunststoffmaterial auf. Der Kunststoffring 4 weist hier eine kreiszylindrische Außenkontur 5 auf, die im nicht eingepressten Zustand ein radiales Übermaß gegenüber einer zugeordneten, zylindrischen Innenkontur eines Aufnahmeauges 17 als Lageraufnahme aufweist, das hier in der Fig. 2 lediglich in der oberen Bildhälfte schematisch dargestellt ist, in der unteren Bildhälfte dagegen aus Übersichtlichkeitsgründen weggelassen worden ist.

Zwischen dem Kunststoffring 4 und dem Lagerinnenteil 2 ist ein einstückiger Elastomerkörper 6 einvulkanisiert, in den hier beispielhaft ein Zwischenblech 7 integriert ist, das den Elastomerkörper 6 in Umfangsrichtung gesehen in Elastomerschichten mit bevorzugt gleicher Materialstärke unterteilt. Wie dies den Fig. 1 und 2 weiter zu entnehmen ist, sind in dem Zwischenblech 7 vereinzelte Ausnehmungen 8 eingebracht, damit beim Vulkanisiervorgang durch diese hindurch das Elastomermaterial hindurchfließen kann zur Ausbildung des Elastomerkörpers 6.

Wie dies insbesondere der Fig. 2 entnommen werden kann, sind die Innenkontur des Kunststoffrings 4, das Zwischenblech 7 und die Außenkontur 11 des Lagerinnenteils 2 form- und konturangepasst ausgebildet, d. h., dass diese einen jeweils im wesentlichen identisch ausgebildeten Lagerinnenteil-Mittenbereich 10, Kunststoffring-Mittenbereich 12 und Zwischenblech-Mittenbereich 13 in Lagerachsrichtung als Axialrichtung gesehen aufweisen, der eine ballige, mehr kugelige Form aufweist und an den sich jeweils zu beiden Seiten in Axialrichtung gesehen wiederum kurze zylindrische Seitenbereiche als Endbereiche 14, 15 und 16 anschließen. Mit einer derartigen form- und konturangepassten Ausbildung der Innenkontur 9 des Kunststoffrings 4, der Außenkontur 11 des Lagerinnenteils 2 und des Zwischenblechs 7 wird ein Aufbau zur Verfügung gestellt, mit dem diese in Umfangsrichtung gesehen jeweils mit einem stets gleichen Spaltabstand voneinander beabstandet sind und somit der in diesem Bereich angeordnete Elastomerkörper 6 eine in allen Richtungen gleichmäßige Kraftaufnahme möglich ist. Der zylindrische Endbereich 16 des Kunststoffrings 4 weist dabei aufgrund seiner zylindrischen Außenkontur 5 eine größere Wandstärke auf als der Kunststoffring-Mittenbereich 12.

Wie dies in der Fig. 2 ferner lediglich schematisch in der oberen Bildhälfte dargestellt ist, kann der Kunststoffring 4 in einer bevorzugten Ausführung in Axialrichtung gesehen zu beiden Seiten im wesentlichen spannungsfrei abgestützt sein, wozu hier beispielsweise ein integral mit einem Aufnahmeauge 17 ausgebildeter axialer Anschlag 18 als Anschlagschulter vorgesehen ist, gegen den sich die eine Seite des Kunststoffrings 4 abstützt, während auf der anderen Seite eine Abstützung mittels eines Sicherungsrings 19 und mit einem axialen Anschlagring 21 erfolgt.

Mit einem derartigen erfindungsgemäßen Elastomer-Gelenklager 1 verformt sich der Kunststoffring 4 beim Einpressen in das Aufnahmeauge 17, was hier allerdings nicht dargestellt ist, radial so, dass in dem Elastomerkörper 6 eine gleichmäßige, radiale Vorspannung aufgebaut wird, wobei sich der Kunststoffring dabei gleichzeitig im wesentlichen formschlüssig mit seiner Außenkontur 5 an die Innenwandung des Aufnahmeauges 17 anlegt. Durch die axialen Abstützeinrichtungen 18 und 19 ist der Kunststoffring 4 dabei insbesondere im Betrieb gegen axiales Wegfließen gesichert. D. h., dass sich der Kunststoffring 4 beim Einpressen plastisch durch Fließen und Setzen verformt und eine spaltlose, flächige und verdrehfeste Anlageverbindung zwischen dem Aufnahmeauge 17 und sich selbst ausbildet. Durchmessertoleranzen, Unrundheiten, Materialflächenausnehmungen etc. werden dabei im Kunststoffmaterial zum Toleranzausgleich aufgenommen.

Wie dies der Fig. 2 zudem weiter entnommen werden kann, sind im Bereich zwischen dem Kunststoffring 4 und dem Zwischenblech 7 sowie zwischen dem Zwischenblech 7 und dem Lagerinnenteil 2 zu beiden Endseiten hin jeweils Radialspalte 20 ausgebildet, in die hinein sich der Elastomerkörper 6 beim Einpressen in das Aufnahmeauge 17 verformen kann.

## Patentansprüche

1. Elastomer-Gelenklager für Fahrzeuge, mit einem Lagerinnenteil (2) und einer das Lagerinnenteil (2) in Umfangsrichtung umgebenden Außenschale (4), zwischen denen ein Elastomerkörper (6) einvulkanisiert ist,
**dadurch gekennzeichnet,**
**dass** die Außenschale (4) aus einem verformbaren Material ausgebildet ist und sich beim Einbringen, insbesondere Einpressen, des Elastomerlagers (1) in eine zugeordnete Lageraufnahme (17), unter Aufbau einer radialen Vorspannung im Elastomerkörper (6), radial verformt, wobei sich die Außenschale (4) mit ihrer Außenkontur (5) im wesentlichen formschlüssig an die Innenwandung der Aufnahme (17) anlegt, und
**dass** die Außenschale (4) in Richtung der Lagerachse (3) gesehen zu beiden Seiten mittels einer an der Lageraufnahme (17) abgeordneten, axialen Abstützeinrichtung (18, 19) abgestützt, vorzugsweise spannungsfrei abgestützt ist.

2. Elastomer-Gelenklager nach Anspruch 1, **dadurch gekennzeichnet, dass** die Außenschale (4) als geschlossener Außenschalenring, insbesondere als geschlossener Kunststoffring aus einem verformbaren, insbesondere plastisch verformbaren Kunststoffmaterial ausgebildet ist.

3. Elastomer-Gelenklager nach Anspruch 2, **dadurch gekennzeichnet, dass** die jeweilige axiale Abstützeinrichtung durch einen integral mit der Aufnahme (17) ausgebildeten axialen Anschlag (18) als Anschlagschulter und/oder einem axialen Anschlagring mit Sicherungsring und/oder einem Sicherungsring (19) alleine gebildet ist.

4. Elastomer-Gelenklager nach einem der Ansprüche 1 bis 3, **dadurch gekennzeichnet, dass** das Lagerinnenteil (2) um die Lagerachse (3) rotationssymmetrisch ausgebildet ist mit einem dem Elastomerkörper (6) zugeordneten sowie eine erhabene Ballenform aufweisenden Lagerinnenteil-Mittenbereich (10), und
dass die Innenkontur (9) der eine zylindrische Außenkontur (5) aufweisenden Außenschale (4) an die Außenkontur (11) des Lagerinnenteils (2) form- und konturangepasst ausgebildet ist und eine der Lagerinnenteil-Ballenform entsprechende, vertiefte Außenschalen-Ballenform als Gegenform in einem Außenschalen-Mittenbereich (12) aufweist, an den sich in Lagerachsrichtung hin zu beiden Seiten radial umlaufende Außenschalen-Seitenbereiche anschließen, die damit eine größere Wandstärke aufweisen als der Außenschalen-Mittenbereich (12).

5. Elastomer-Gelenklager nach Anspruch 4, **dadurch gekennzeichnet, dass** der Lagerinnenteil-Mittenbereich (10) und damit der Außenschalen-Mittenbereich (12) in Lagerachsrichtung gesehen eine kugelige oder doppelkonusartige Form ausbilden.

6. Elastomer-Gelenklager nach einem der Ansprüche 1 bis 3, **dadurch gekennzeichnet, dass** das Lagerinnenteil um die Lagerachse rotationssymmetrisch mit einem zylinderförmigen, insbesondere zylindrischen Mittenbereich ausgebildet ist, an den die Außenschale form- und konturangepasst ausgebildet ist, und
dass die sich an das Lagerinnenteil und an die Außenschale anschließenden Seitenbereiche in Lagerachsrichtung gesehen zu beiden Seiten eine axiale Stützfläche ausbilden.

7. Elastomer-Gelenklager nach einem der Ansprüche 4 bis 6, **dadurch gekennzeichnet, dass** in den vorzugsweise einstückig ausgebildeten Elastomerkörper (6) wenigstens eine, den Elastomerkörper (6) in Umfangsrichtung bevorzugt in Elastomerschichten mit in etwa gleicher Materialstärke unterteilende und in Umfangsrichtung wenigstens bereichsweise um das Lagerinnenteil umlaufende Zwischenschale (7) integriert ist, die an die ballige Außenkontur (11) des Lagerinnenteils (2) form- und konturangepasst ausgebildet ist und somit ebenfalls einen entsprechend ausgebildeten Zwischenschalen-Mittenbereich (13) oder gegebenenfalls weitere entsprechend form- und konturangepasst ausgebildete Bereiche aufweist.

8. Elastomer-Gelenklager nach einem der Ansprüche 1 bis 7, **dadurch gekennzeichnet, dass** das Lagerinnenteil (2) rohrförmig, vorzugsweise mit einem Innenkonus als Befestigungskonus, ausgebildet ist, das im montierten Zustand formschlüssig auf ein Gegenelement, vorzugsweise einen Konuszapfen, aufgesteckt und dort lagefixiert gehalten und gesichert ist.

9. Elastomer-Gelenklager nach einem der Ansprüche 1 bis 8, **dadurch gekennzeichnet, dass** das Lagerinnenteil wenigstens eine Anschlusspratze aufweist, die im montierten Zustand aus dem Bereich der Lageraufnahme, insbesondere eines Aufnahmeauges, vorsteht.

10. Elastomer-Gelenklager nach einem der Ansprüche 1 bis 9, **dadurch gekennzeichnet, dass** das Elastomerlager (1) ein Zentralgelenklager eines Dreieckslenkers zur Verbindung eines Achskörpers mit einem Aufbau für Nutzfahrzeuge ist, von dem ausgehend sich Lagerschenkel im wesentlichen V-förmig zu den beiden anderen gegebenenfalls gleich aufgebauten Lagerstellen erstrecken.

11. Elastomer-Gelenklager nach einem der Ansprüche 1 bis 10, **dadurch gekennzeichnet, dass** das starre, unverformbare Lagerinnenteil (2) aus Metall und/oder die Zwischenschale (7) aus einem Blech hergestellt ist.
